# DEMANDE DE BREVET EUROPEEN

(11) **EP 2 986 043 A1**
(43) Date de publication de la demande: **17.02.2016**
(21) Numéro de dépôt: 14306272.7
(22) Date de dépôt: 13.08.2014
(51) Int. Cl.: H04W 8/24

(54) **Procédé d'établissement de sessions OTA entre des terminaux et un serveur OTA, serveur OTA et serveur proxy inverse correspondants**

(71) Demandeur: GEMALTO SA, 92190 Meudon (FR)
(72) Inventeur: Berard, Xavier, 13705 LA CIOTAT (FR); Amiel, Patrice, 13705 LA CIOTAT (FR); Tressol, Ludovic, 13705 LA CIOTAT (FR); Valles, Gregory, 13705 LA CIOTAT (FR)

(57) **Abrégé**

L'invention concerne notamment un procédé d'établissement de sessions OTA entre des terminaux et un serveur OTA (12) dans un réseau de télécommunications, les terminaux coopérant chacun avec un élément de sécurité (10) apte à interroger le serveur OTA (12) pour l'établissement d'une session sécurisée afin de télécharger des données du serveur OTA (12) par l'intermédiaire d'un serveur proxy inverse (11) afin de mettre à jour les éléments de sécurité (10). Selon l'invention, le procédé consiste à :
- Fournir du serveur OTA (12) au serveur proxy inverse (11) une liste d'identifiants des éléments de sécurité (10) pour lesquels une mise à jour est disponible ;
- N'établir de session sécurisée entre les éléments de sécurité (10) et le serveur OTA (12) que pour les éléments de sécurité (10) dont les identifiants sont compris dans cette liste.

## Description

La présente invention concerne le domaine des télécommunications et plus précisément celui de l'administration à distance d'éléments de sécurité, tels que des UICCs (Universal Integrated Circuit Cards) coopérant avec des terminaux, par exemple des terminaux portables tels que des téléphones, des smartphones, des PDAs ou des ordinateurs. Les éléments de sécurité peuvent également se présenter sous la forme de circuits intégrés dans des machines, tel que dans le domaine du M2M (Machine to Machine en anglais). Ils ne sont pas nécessairement physiquement connectés au terminaux, mais peuvent communiquer avec ceux-ci par une liaison courte distance où un élément de sécurité est déporté et communique par un canal courte distance avec le terminal (Bluetooth ou Wifi par exemple).

Une telle administration d'éléments de sécurité est classiquement réalisée par OTA (Over The Air en anglais - par voie radio en français) afin de mettre à jour ou installer des données ou des programmes dans les éléments de sécurité. Une administration de ce genre utilise le protocole http et est également appelée 'RFM' (Remote File Management en anglais - Administration de fichiers à distance en français) ou 'RAM' (Remote Administration Management en anglais - Administration à distance en français) par http (HyperText Transfer Protocol en anglais - protocole de transfert hypertexte en français).

Il existe deux manières pour administrer des éléments de sécurité :
- La première consiste à transmettre à partir d'une plateforme OTA des données ou des programmes à des éléments de sécurité ciblés, par exemple lors de campagnes de mise à jour. Ce type d'administration est appelé « push » en anglais et est basé sur de la transmission en mode SMS. Le problème est que cette méthode ne convient pas dans les réseaux de nouvelle génération tel que les réseaux LTE qui ne supportent pas le SMS (ils sont entièrement http). De plus, les administrations de type RAM ou RFM par http ont été mises en place pour éviter des protocoles non fiables tels que le SMS.
- La seconde consiste à interroger, par exemple régulièrement ou à l'occurrence d'un évènement, la plateforme OTA pour connaître l'existence de mises à jour disponibles. Cette interrogation est à l'initiative de l'élément de sécurité et est appelée « polling » ou « pull » en anglais (l'élément de sécurité va voir si la plateforme a quelque chose à lui transmettre). L'interrogation s'effectue en mode http.

Le problème de cette solution est qu'en général, l'élément de sécurité n'attend pas l'occurrence d'un évènement pour venir interroger la plateforme OTA. Le « polling » s'effectue donc régulièrement, par exemple tous les quinze jours ou mensuellement. Et la plupart du temps, la plateforme OTA n'a rien à transmettre à l'élément de sécurité... Le demandeur a par exemple observé que dans 90% des interrogations de la plateforme OTA par les éléments de sécurité sur le terrain, aucune mise à jour ou programme ou donnée n'est à transmettre à l'élément de sécurité. Ceci se traduit par un trafic hertzien inutile et une surcharge de la plateforme OTA (une liaison TLS-PSK est instaurée entre l'élément de sécurité et la plateforme OTA à chaque interrogation de l'élément de sécurité). De plus, lorsqu'un réseau interne de centre de données est impliqué dans la mise à jour des éléments de sécurité (par exemple un centre de données d'un fabricant d'éléments de sécurité chez qui l'opérateur de téléphonie mobile aura localisé ses services) est utilisé, ce réseau sera lui aussi sollicité inutilement. De plus, lorsque ce réseau fait appel à des serveurs décentralisés physiquement, des communications supplémentaires viennent s'y ajouter.

Pour pallier à cet inconvénient de la seconde manière d'opérer, deux solutions sont possibles :
- Rallonger la période entre deux interrogations (« polling ») de la plateforme OTA (une application dans l'élément de sécurité est mise à jour pour rallonger cette période). L'inconvénient est que si des mises à jour sont disponibles juste après la dernière interrogation, l'élément de sécurité ne sera mis à jour que bien plus tard.
- Passer en mode « push ». On retombe alors sur les problèmes mentionnés précédemment.

On constate donc qu'une interrogation régulière d'une plateforme OTA par les éléments de sécurité n'est pas du tout satisfaisante et a un impact très négatif notamment sur la plateforme OTA qui est sollicitée en permanence pour évaluer des requêtes http qui ne mènent à aucune mise à jour de ces éléments de sécurité et génère du trafic inutile.

La présente invention a notamment pour objectif de remédier à ces inconvénients.

Plus précisément, un des objectifs de l'invention est d'éviter un trafic de données inutile entre un élément de sécurité venu « poller » (interroger) un serveur ou une plateforme OTA pour savoir si cette plateforme a des données à lui transmettre (le terme « données » est ici entendu au sens large, il peut s'agir d'une transmission d'un programme, de données d'abonnement (IMSI/Ki pour un nouvel abonnement avec les domaines de sécurité et les clés correspondants) ou de simples mises à jour de données ou de programmes. Ce trafic de données inutile provient essentiellement de l'établissement de sessions TLS-PSK entre les éléments de sécurité qui viennent « poller » et la plateforme OTA.

Cet objectif, ainsi que d'autres qui apparaîtront par la suite est atteint grâce à un procédé d'établissement de sessions OTA entre des terminaux et un serveur OTA dans un réseau de télécommunications, les terminaux coopérant chacun avec un élément de sécurité apte à interroger le serveur OTA pour l'établissement d'une session sécurisée afin de télécharger des données du serveur OTA par l'intermédiaire d'un serveur proxy inverse afin de mettre à jour les éléments de sécurité, ce procédé consistant à :
- Fournir du serveur OTA au serveur proxy inverse une liste d'identifiants des éléments de sécurité pour lesquels une mise à jour est disponible ;
- N'établir de session sécurisée entre les éléments de sécurité et le serveur OTA que pour les éléments de sécurité dont les identifiants sont compris dans la liste.

Avantageusement, le procédé consiste à supprimer l'identifiant d'un élément de sécurité dans la liste une fois que cet élément de sécurité a été mis à jour.

Préférentiellement, l'identifiant est un PSK-ID et la session sécurisée est une session TLS-PSK.

Dans un mode de mise en oeuvrer avantageux, le serveur OTA fournit également son niveau de charge au serveur proxy inverse.

L'invention concerne également un serveur OTA destiné à mettre à jour des éléments de sécurité coopérant avec des terminaux dans un réseau de télécommunications, les élément de sécurité étant chacun aptes à interroger le serveur OTA pour l'établissement d'une session sécurisée afin de télécharger des données du serveur OTA par l'intermédiaire d'un serveur proxy inverse afin de mettre à jour les éléments de sécurité, ce serveur OTA comprenant des moyens pour fournir au serveur proxy inverse une liste d'identifiants des éléments de sécurité pour lesquels une mise à jour est disponible.

Avantageusement, le serveur OTA comprend des moyens pour fournir au serveur proxy inverse son niveau de charge.

L'invention concerne également un serveur proxy inverse d'un réseau de télécommunications, le serveur proxy inverse coopérant d'une part avec des terminaux coopérant avec des éléments de sécurité et d'autre part avec un serveur OTA apte à mettre à jour les éléments de sécurité à la demande de ces éléments de sécurité par l'intermédiaire du serveur proxy inverse, ce serveur proxy comprenant une liste d'identifiants des éléments de sécurité pour lesquels une mise à jour est disponible, la liste étant mise à jour par le serveur OTA, le serveur proxy inverse comprenant des moyens pour autoriser l'établissement de sessions sécurisées entre le serveur OTA et les éléments de sécurité dont les identifiants sont compris dans la liste et des moyens pour interdire l'établissement de sessions sécurisées entre le serveur OTA et les éléments de sécurité dont les identifiants ne sont pas compris dans la liste.

Cette liste est préférentiellement mise à jour par le serveur OTA.

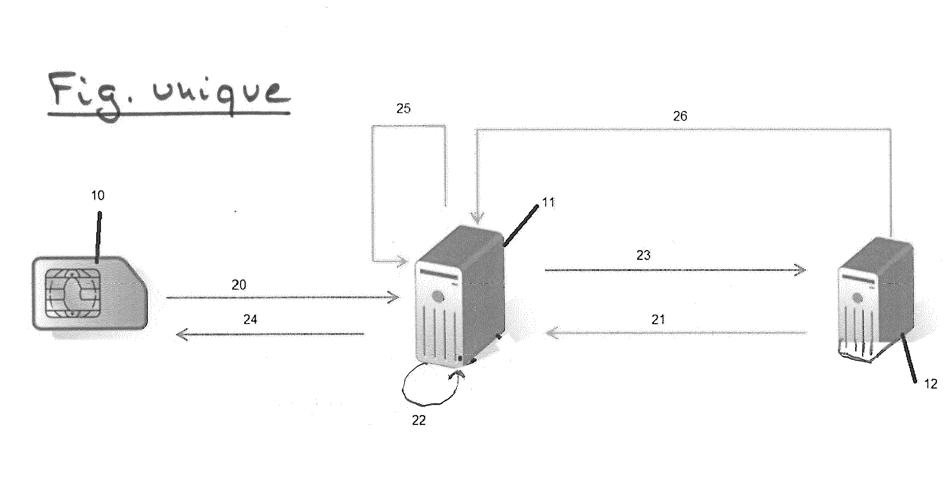

D'autres caractéristiques et avantages de la présente invention apparaîtront à la lecture de la description suivante d'un mode de mise en oeuvre préférentiel, donné à titre illustratif et non limitatif, et de la figure unique annexée représentant les étapes essentielles de l'invention.

Dans cette figure, trois éléments sont représentés :
- Un élément de sécurité 10 ;
- Un serveur proxy inverse 11 ;
- Un serveur OTA 12.

L'élément de sécurité 10, ici représenté sous la forme d'une carte SIM ou UICC, coopère avec un terminal, par exemple un smartphone non représenté. En mode « pull », c'est cet élément de sécurité 10 qui décide, typiquement sur une base temps (par exemple quinze jours), d'interroger le serveur OTA 12 (un serveur d'applications) pour savoir si ce dernier a des données à lui transmettre.

Cette interrogation passe classiquement par un serveur proxy inverse 11 (« reverse proxy » en anglais) qui, dans l'état de la technique, sert à l'établissement de la liaison TLS-PSK entre l'élément de sécurité 10 et le serveur OTA 12.

L'invention propose d'utiliser ce serveur proxy inverse 11 en tant que filtre entre l'élément de sécurité 10 et le serveur OTA 12. La fonction de filtrage a pour effet de ne pas établir de session sécurisée entre l'élément de sécurité 10 et le serveur OTA 12 si ce dernier n'a pas de données à lui transmettre.

Plus précisément, le procédé selon l'invention fonctionne de la manière suivante :
Lors d'une étape 20, l'élément de sécurité 10 initie une requête de « polling » auprès du serveur OTA 12. Cette requête parvient, comme dans l'état de la technique, au serveur proxy inverse 11.

Selon l'invention, le serveur proxy inverse 11 a préalablement reçu, de la part du serveur OTA 12, lors d'une étape 21, une liste ou une mise à jour d'une liste d'éléments de sécurité 10 autorisés à se connecter au serveur OTA 12. Cette liste comprend typiquement les identifiants, de préférence les PSK-ID ou les ICCID, des éléments de sécurité 10 pour lesquels des mises à jour (données au sens large du terme) sont disponibles au niveau du serveur OTA 12. Le serveur proxy inverse 11 connaît donc les éléments de sécurité 10 pour lesquels une mise à jour est disponible.

Lors d'une étape 22, le serveur proxy inverse 11 vérifie si l'élément de sécurité 10 qui a initié l'étape de « polling » 20, grâce à l'identifiant reçu, si ce dernier est éligible à une mise à jour. Si l'identifiant reçu correspond à celui d'un élément de sécurité 10 pour lequel des données de mise à jour sont disponibles, le serveur proxy inverse 11 transmet, lors d'une étape 23 une information au serveur OTA 12 l'informant que l'élément de sécurité 10 est apte à recevoir des données de la part du serveur OTA 12 et une session sécurisée, de préférence une session TLS-PSK est établie entre l'élément de sécurité 10 et le serveur OTA 12 par l'intermédiaire du serveur proxy inverse 11. Les données à transmettre de la plateforme OTA 12 à l'élément de sécurité 10 sont alors transmises dans un canal sécurisé. Après la fin de la session, le canal est fermé.

En revanche, si l'identifiant reçu par le serveur proxy inverse 11 ne correspond pas à celui d'un élément de sécurité 10 pour lequel des données de mise à jour sont disponibles, le serveur proxy inverse 11 transmet à l'élément de sécurité 10, lors d'une étape 24, une information l'informant qu'il n'y a pas de données à lui transmettre de la part du serveur OTA 12 et aucune session sécurisée n'est établie entre l'élément de sécurité 10 et le serveur OTA 12.

Lors d'une étape 25, après qu'une mise à jour des données ait été réalisée sur un élément de sécurité 10, le serveur proxy inverse 11 rafraichit sa liste pour en éliminer l'identifiant de l'élément de sécurité 10 qui vient d'être mis à jour. Cette opération peut également être mise en oeuvre par l'étape 21 précitée (rafraichissement de la liste des éléments de sécurité à mettre à jour).

L'utilisation de PSK-ID en tant que critère de filtrage au niveau du proxy inverse 11 apporte deux avantages :
- Le filtrage par le proxy inverse 11 est réalisé avant tout établissement d'une session TLS-PSK ;
- Le PSK-ID est très représentatif de l'entité (l'élément de sécurité 10) pour qui une action doit être entreprise puisqu'il inclut le domaine de sécurité pour lequel des services doivent être exécutés dans le serveur OTA 12.

Une étape facultative 26 consiste à informer le serveur proxy inverse 11 de son état de charge. Si son état de charge est trop important, le serveur proxy inverse 11 interdit systématiquement toute liaison sécurisée entre le serveur OTA 12 et un élément de sécurité 10 venant s'enquérir d'une disponibilité de données à mettre à jour ou redirige la requête de l'élément de sécurité vers un serveur qui a la capacité de prendre en charge cette requête de mise à jour.

La présente invention concerne également le serveur OTA 12 destiné à mettre à jour des éléments de sécurité 10 coopérant avec des terminaux dans un réseau de télécommunications, les élément de sécurité 10 étant chacun aptes à interroger le serveur OTA 12 pour l'établissement d'une session sécurisée afin de télécharger des données du serveur OTA 12 par l'intermédiaire du serveur proxy inverse 11 afin de mettre à jour les éléments de sécurité 10, ce serveur OTA 12 comprenant des moyens pour fournir au serveur proxy inverse 11 une liste d'identifiants des éléments de sécurité 10 pour lesquels une mise à jour est disponible.

Le serveur OTA 12 comprend également des moyens pour fournir au serveur proxy inverse 11 son niveau de charge.

L'invention concerne également le serveur proxy inverse 11 coopérant d'une part avec des terminaux coopérant avec les éléments de sécurité 10 et d'autre part avec le serveur OTA 12 apte à mettre à jour les éléments de sécurité 10 à leur demande par l'intermédiaire du serveur proxy inverse 11, ce serveur proxy inverse 11 comprenant une liste d'identifiants des éléments de sécurité 10 pour lesquels une mise à jour est disponible, cette liste étant mise à jour par le serveur OTA 12 (étape 21), le serveur proxy inverse 11 comprenant des moyens pour autoriser l'établissement de sessions sécurisées entre le serveur OTA 12 et les éléments de sécurité 10 dont les identifiants sont compris dans cette liste et des moyens pour interdire l'établissement de sessions sécurisées entre le serveur OTA 12 et les éléments de sécurité 10 dont les identifiants ne sont pas compris dans cette liste.

L'invention consiste donc à filtrer en amont du serveur OTA 12, au niveau du serveur proxy inverse 11, les éléments de sécurité qui ne doivent pas être mis à jour. Ceci permet de ne pas surcharger le travail du serveur OTA 12 et de ne pas générer du trafic inutile. Le serveur proxy inverse 11 rejette en amont les demandes des éléments de sécurité 10 qui n'ont pas besoin d'être mis à jour, avant tout établissement d'une liaison TLS-PSK. Ceci permet de diminuer de 90% la charge de travail du serveur OTA 12 et des centres de données qui sont connectés au réseau de l'opérateur.

A chaque fois qu'une nouvelle application doit être installée ou modifiée au niveau d'éléments de sécurité 10, le serveur d'application ou le serveur OTA 12 met à jour la liste des identifiants des éléments de sécurité 10 concernés au niveau du serveur proxy inverse 11.

Il est également possible de mettre en place un politique de filtrage basée sur certaines priorités (mises à jour importantes par exemple), des périodes de validité d'applications (qui seront du coup prioritaires par rapport à d'autres applications ou mises à jour) ou des périodes d'expiration de validité d'applications qui seront elles aussi prioritaires et mises à jour dans la liste fournie au serveur proxy inverse 11 avec leurs identifiants.

## Revendications

1. Procédé d'établissement de sessions OTA entre des terminaux et un serveur OTA (12) dans un réseau de télécommunications, les terminaux coopérant chacun avec un élément de sécurité (10) apte à interroger le serveur OTA (12) pour l'établissement d'une session sécurisée afin de télécharger des données du serveur OTA (12) par l'intermédiaire d'un serveur proxy inverse (11) afin de mettre à jour les éléments de sécurité (10), **caractérisé en ce qu'**il consiste à :
- Fournir du serveur OTA (12) au serveur proxy inverse (11) une liste d'identifiants des éléments de sécurité (10) pour lesquels une mise à jour est disponible ;
- N'établir de session sécurisée entre les éléments de sécurité (10) et le serveur OTA (12) que pour les éléments de sécurité (10) dont les identifiants sont compris dans la liste.

2. Procédé selon la revendication 1, **caractérisé en ce qu'**il consiste à supprimer l'identifiant d'un élément de sécurité (10) dans la liste une fois que l'élément de sécurité (10) a été mis à jour.

3. Procédé selon l'une des revendications 1 et 2, **caractérisé en ce que** l'identifiant est un PSK-ID.

4. Procédé selon l'une des revendications 1 à 3, **caractérisé en ce que** la session sécurisée est une session TLS-PSK.

5. Procédé selon l'une des revendications 1 à 4, **caractérisé en ce que** le serveur OTA (12) fournit également son niveau de charge au serveur proxy inverse (11).

6. Serveur OTA (12) destiné à mettre à jour des éléments de sécurité (10) coopérant avec des terminaux dans un réseau de télécommunications, les élément de sécurité (10) étant chacun aptes à interroger le serveur OTA (12) pour l'établissement d'une session sécurisée afin de télécharger des données du serveur OTA (12) par l'intermédiaire d'un serveur proxy inverse (11) afin de mettre à jour les éléments de sécurité (10), **caractérisé en ce qu'**il comprend des moyens pour fournir au serveur proxy inverse (11) une liste d'identifiants des éléments de sécurité (10) pour lesquels une mise à jour est disponible.

7. Serveur OTA (12) selon la revendication 6, **caractérisé en ce qu'**il comprend des moyens pour fournir au serveur proxy inverse (11) son niveau de charge.

8. Serveur proxy inverse (11) d'un réseau de télécommunications, le serveur proxy inverse (11) coopérant d'une part avec des terminaux coopérant avec des éléments de sécurité (10) et d'autre part avec un serveur OTA (12) apte à mettre à jour les éléments de sécurité (10) à la demande desdits éléments de sécurité (10) par l'intermédiaire du serveur proxy inverse (11), **caractérisé en ce qu'**il comprend une liste d'identifiants des éléments de sécurité (10) pour lesquels une mise à jour est disponible, la liste étant mise à jour par le serveur OTA (12), le serveur proxy inverse (11) comprenant des moyens pour autoriser l'établissement de sessions sécurisées entre le serveur OTA (12) et les éléments de sécurité (10) dont les identifiants sont compris dans la liste et des moyens pour interdire l'établissement de sessions sécurisées entre le serveur OTA (12) et les éléments de sécurité (10) dont les identifiants ne sont pas compris dans la liste.

9. Serveur proxy inverse (11) selon la revendication 8, **caractérisé en ce que** la liste est mise à jour par le serveur OTA (12).
